**Europäisches Patentamt**

**European Patent Office**

**Office européen des brevets**

(19)

(11) Veröffentlichungsnummer: **0 096 681**
**B1**

(12) # EUROPÄISCHE PATENTSCHRIFT

(45) Veröffentlichungstag der Patentschrift:
14.08.85

(51) Int. Cl.⁴: **F 02 B 27/00, F 02 M 35/10**

(21) Anmeldenummer: **83890075.1**

(22) Anmeldetag: **10.05.83**

(54) Vorrichtung zur Frischladungszufuhr für Kolben-Brennkraftmaschinen mit Resonanzaufladung.

(30) Priorität: **04.06.82 AT 2159/82**

(43) Veröffentlichungstag der Anmeldung:
**21.12.83 Patentblatt 83/51**

(45) Bekanntmachung des Hinweises auf die Patenterteilung:
**14.08.85 Patentblatt 85/33**

(84) Benannte Vertragsstaaten:
**DE FR GB IT NL SE**

(56) Entgegenhaltungen:
**DE - A - 2 621 638**
**DE - A - 2 831 985**
**DE - U - 6 930 385**

**AUTOMOTIVE ENGINEERING, Band 87, Nr. 11, November 1979 D. SCOTT "Tuned induction uprates turbocharged diesel", Seiten 80-81**

(73) Patentinhaber: **Steyr-Daimler-Puch Aktiengesellschaft, Kärntnerring 7, A-1010 Wien (AT)**

(72) Erfinder: **Valev, Assen, Dipl.-Ing. Dr., Schillerstrasse 15, A-4400 Steyr (AT)**
Erfinder: **Wagner, Josef, Penz 18, A-4441 Behamberg (AT)**

## Beschreibung

Die Erfindung bezieht sich auf eine Vorrichtung zur Frischladungszufuhr für Kolben-Brennkraftmaschinen mit Resonanzaufladung, bestehend aus einem Druckausgleichsraum, in dem die Frischladungszuleitung mündet, zwei Resonanzräumen, deren jeder an je eine Zylindergruppe der Brennkraftmaschine angeschlossen ist und zwei den Druckausgleichsraum mit den Resonanzräumen verbindenden Resonanzrohren.

Derartige Vorrichtungen haben die Aufgabe, die auftretenden Resonanzschwingungen der Einlassluft zur Liefergradverbesserung auszunützen.

Aus der DE-AS Nr. 2621638 ist eine Vorrichtung dieser Art bekannt, welche einstückig ausgebildet, nur unter Beanspruchung eines relativ grossen Bauraumes an eine Brennkraftmaschine anbaubar und nur einseitig an die Frischladungszufuhr anschliessbar ist. Bei Anbau der Vorrichtung an eine in Fahrzeuglängsrichtung eingebaute Brennkraftmaschine ohne Ladeluftkühler ist ein Anschluss am hinteren Ende der Vorrichtung erforderlich, um eine kurze Zuleitungsführung zu gewährleisten. Bei einer solchen Brennkraftmaschine mit Ladeluftkühler ergibt sich jedoch die Notwendigkeit des Anschlusses am vorderen Ende der Vorrichtung. Mit der bekannten Vorrichtung sind daher beide Anschlussvarianten nicht möglich und es wären für die beiden verschiedenen Brennkraftmaschinen zwei hinsichtlich ihres Anschlusses für die Frischladungszufuhr verschieden ausgebildete Vorrichtungen erforderlich.

Es ist auch aus der DE-AS Nr. 2831985 bekannt, eine solche Vorrichtung aus zwei zusammenschliessbaren Gussteilen auszubilden und mit einem einseitigen Anschluss für die Frischladungszufuhr zu versehen. Zu den mit diesem Anschluss verbundenen, bereits geschilderten Nachteilen und der dadurch beschränkten Verwendungsmöglichkeit der Vorrichtung kommt noch, dass der Vorteil eines platzsparenden kompakten Aufbaues dieser Vorrichtung nur durch eine beträchtliche Erhöhung des technischen Aufwandes aufgrund der Zweiteiligkeit der Vorrichtung erreicht wird.

Demnach liegt der Erfindung die Aufgabe zugrunde, diese Mängel zu beseitigen und eine Vorrichtung der eingangs geschilderten Art zu schaffen, bei der sich beträchtliche Vorteile hinsichtlich der räumlichen Gesamtanordnung und den Gesamtabmessungen ergeben und welche einen platzsparenden Anbau an eine Brennkraftmaschine mit und ohne Ladeluftkühler ermöglicht.

Die Erfindung löst die gestellte Aufgabe dadurch, dass der Druckausgleichsraum aus zwei durch wenigstens einen Kanal miteinander verbundenen, an den beiden Ende der Vorrichtung angeordneten Kammern besteht, die nach aussen führende, fallweise verschliessbare Öffnungen besitzen, von denen wenigstens eine als Frischladungs-Einlassöffnung dient. Die Frischladungszuleitung kann je nach Erfordernis wahlweise an dem einen oder anderen Ende der Vorrichtung angeschlossen und die verbleibende Öffnung verschlossen werden, wodurch die Verwendung der Vorrichtung bei Brennkraftmaschinen mit oder ohne Ladeluftkühler möglich ist und sich Vorteile hinsichtlich des Platzbedarfes, der Leitungsführung, der Frischladungszuleitung und einer räumlich günstigeren Gesamtanordnung und der Gesamtabmessungen ergeben. Ausserdem wird eine grössere Kompaktheit der Vorrichtung ohne Notwendigkeit einer mehrteiligen Ausbildung erreicht.

In weiterer Ausbildung der Erfindung fluchten die fallweise verschliessbaren Öffnungen wenigstens annähernd mit Aufnahmestellen für die Resonanzrohre. Dadurch vereinfacht sich sowohl die Herstellung des Gehäuses als auch die Montage der Resonanzrohre, die durch die Öffnungen problemlos in das Gehäuse eingeführt und in die Aufnahmestellen eingesetzt werden können.

Um innerhalb der Resonanzrohre störende Absätze bzw. Stösse zu verhindern und die Gussform des Gehäuses zu vereinfachen, weisen die fallweise verschliessbaren Öffnungen und die Aufnahmestellen einen den grössten Durchmesser der sich an ihren Enden trichterförmig weitenden einstückigen Resonanzrohre übersteigenden Durchmesser auf. Um eine sichere Trennung der beiden Resonanzräume voneinander zu gewährleisten, ist wenigstens eines der beiden Resonanzrohre dicht in jenem Resonanzraum eingesetzt, in dem das jeweils andere Resonanzrohr mündet.

In der Zeichnung ist der Erfindungsgegenstand in einem Ausführungsbeispiel dargestellt, und zwar zeigen:

Fig. 1 eine Vorrichtung im Schnitt nach durch die Achsen der Resonanzrohre gelegten Ebenen, und

Fig. 2 im Schnitt nach der Linie II-II der Fig. 1.

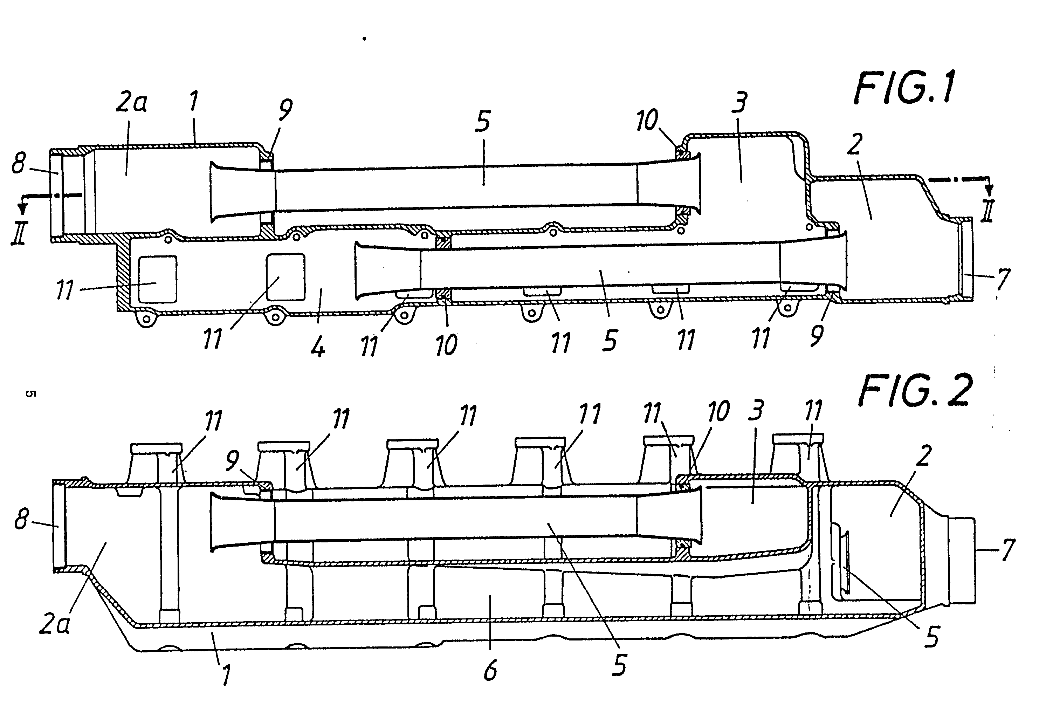

Die Vorrichtung zur Frischladungszufuhr für eine Kolben-Brennkraftmaschine mit Resonanzaufladung weist ein einstückiges Gussgehäuse 1 auf, in dem ein Lufteintritts- bzw. Druckausgleichsraum mit Kammern 2, 2a sowie zwei an je eine Zylindergruppe der Brennkraftmaschine angeschlossene Resonanzräume 3, 4 ausgebildet sind. Die beiden Resonanzräume 3, 4 sind mit den Kammern 2, 2a des Lufteintritts- bzw. Druckausgleichsraumes durch zwei Resonanzrohre 5 verbunden. Die beiden Kammern 2, 2a des Lufteintritts- bzw. Druckausgleichraumes sind über einen weiten Kanal 6 (Fig. 2) aneinander angeschlossen und stellen somit eine Einheit dar. Das Gehäuse 1 weist in Verlängerung der Resonanzrohre 5 Öffnungen 7, 8 auf, deren Durchmesser den grössten Durchmesser der sich an ihren Enden trichterförmig weitenden einstückigen Resonanzrohre 5 übersteigt, so dass die Resonanzrohre 5 durch die Öffnungen 7, 8 in das Gehäuse eingeführt bzw. eingeschoben werden können. Dabei besitzt das Gehäuse für die Resonanzrohre 5 abdichtbare Aufnahmestellen 9, 10. An den Aufnahmestellen 9 sind die Resonanzrohre 5 axial fixiert, werden aber an den anderen Aufnahmestellen 10 verschiebbar gehalten. Die eine Gehäuseöffnung 7 dient zugleich als Lufteinlassöffnung, wogegen die Gehäuseöffnung 8 nach der Montage der Resonanzrohre 5 dicht verschlossen wird.

Die Luft tritt durch die Gehäuseöffnung 7 in die Kammer 2 des Lufteintritts- bzw. Druckausgleichraumes ein und gelangt durch das eine Resonanzrohr 5 in den Resonanzraum 4 und von dort über Stutzen 11 in die Zylinder der einen Gruppe. Der andere Teil der eintretenden Luft gelangt über den Kanal 6 in die Kammer 2a des Lufteintritts- bzw. Druckausgleichraumes und von diesem über das andere Resonanzrohr 5 in den Resonanzraum 3, von dem weitere Stutzen 11 in die andere Zylindergruppe führen.

## Patentansprüche

1. Vorrichtung zur Frischladungszufuhr für Kolben-Brennkraftmaschinen mit Resonanzaufladung, bestehend aus einem Druckausgleichsraum, in den die Frischladungszuleitung mündet, zwei Resonanzräumen (3, 4), deren jeder an je eine Zylindergruppe der Brennkraftmaschine angeschlossen ist, und zwei den Druckausgleichsraum mit den Resonanzräumen verbindenden Resonanzrohren (5), dadurch gekennzeichnet, dass der Druckausgleichsraum aus zwei durch wenigstens einen Kanal (6) miteinander verbundenen, an den beiden Enden der Vorrichtung angeordneten Kammern (2, 2a) besteht, die nach aussen führende, fallweise verschliessbare Öffnungen (7, 8) besitzen, von denen wenigstens eine (7) als Frischladungs-Einlassöffnung dient.

2. Vorrichtung nach Anspruch 1, dadurch gekennzeichnet, dass die fallweise verschliessbaren Öffnungen (7, 8) wenigstens annähernd mit Aufnahmestellen (9, 10) für die Resonanzrohre (5) fluchten.

3. Vorrichtung nach den Ansprüchen 1 und 2, dadurch gekennzeichnet, dass die fallweise verschliessbaren Öffnungen (7, 8) und die Aufnahmestellen (9, 10) einen den grössten Durchmesser der Resonanzrohre (5) übersteigenden Durchmesser aufweisen.

4. Vorrichtung nach Anspruch 1, dadurch gekennzeichnet, dass wenigstens eines der beiden Resonanzrohre (5) dicht in jenen Resonanzraum (3) eingesetzt ist, in den das jeweils andere Resonanzrohr (5) mündet.

## Claims

1. A fresh-charge feeding device for internal combustion piston engines with tuned intake pressure charging, comprising a pressure balance chamber into which the fresh charge feed opens, two resonance chambers (3, 4), each of which is connected to one cylinder group of the internal combustion engine in each case and two resonance tubes (5) connecting the pressure balance chamber to the resonance chambers, characterized in that the pressure balance chamber comprises two chambers (2, 2a), which are connected together by at least one duct (6) and disposed at both ends of the device and which comprise openings (7, 8), which lead outwards and can be closed where appropriate and at least one (7) of which acts as a fresh-charge inlet port.

2. A device according to Claim 1, characterized in that the openings (7, 8) which can be closed where appropriate are at least approximately in alignment with receiving positions (9, 10) for the resonance tubes (5).

3. A device according to Claims 1 and 2, characterized in that the openings (7, 8) which can be closed where appropriate and the receiving positions (9, 10) have a diameter which exceeds the maximum diameter of the resonance tubes (5).

4. A device according to Claim 1, characterized in that at least one of the two resonance tubes (5) is tightly inserted into that resonance chamber (3), into which the other resonance tube (5) opens in each case.

## Revendications

1. Dispositif d'alimentation en charge fraîche pour moteurs à combustion interne avec suralimentation par oscillation de résonance d'admission, comprenant un volume d'égalisation de pression dans lequel débouche la conduite d'arrivée de charge fraîche, deux volumes de résonance (3, 4) dont chacun est relié à l'un des groupes de cylindres du moteur à combustion interne et deux tuyaux de résonance (5) reliant le volume d'égalisation de pression aux volumes de résonance, caractérisé en ce que le volume d'égalisation de pression est constitué par deux chambres (2, 2a) disposées aux deux extrémités du dispositif, reliées par au moins un canal (6), qui possèdent des ouvertures (7, 8) débouchant à l'extérieur, susceptibles d'être obturées, dont l'une (7) au moins sert d'ouverture d'admission de charge fraîche.

2. Dispositif selon la revendication 1, caractérisé en ce que les ouvertures (7, 8) pouvant éventuellement être obturées sont situées au moins à peu près dans le prolongement des logements (9, 10) des tuyaux de résonance (5).

3. Dispositif selon les revendications 1 et 2, caractérisé en ce que les ouvertures (7, 8) pouvant éventuellement être obturées et les logements (9, 10) ont un diamètre supérieur au plus grand diamètre des tuyaux de résonance (5).

4. Dispositif selon la revendication 1, caractérisé en ce qu'au moins l'un des deux tuyaux de résonance (5) est engagé hermétiquement dans celui des volumes de résonance (3) dans lequel débouche l'autre tuyau de résonance (5).

*FIG.1*

*FIG.2*

0 096 681